# EUROPEAN PATENT APPLICATION

(11) **EP 4 464 221 A1**
(43) Date of publication of application: **20.11.2024**
(21) Application number: 22918176.3
(22) Date of filing: 08.08.2022
(51) Int. Cl.: A47L 11/24, A47L 11/40, B08B 11/00

(54) **CLEANING BRUSH AND INTELLIGENT CLEANING APPARATUS**

(30) Priority: 10.01.2022 CN 202210022939
(71) Applicant: Beijing Roborock Technology Co., Ltd., Beijing 102206 (CN)
(72) Inventor: LI, Xing, Beijing 102206 (CN); ZHOU, Yongfei, Beijing 102206 (CN); DUAN, Chuanlin, Beijing 102206 (CN)
(74) Representative: Michalski Hüttermann & Partner Patentanwälte mbB
(86) International application number: PCT/CN2022/110958
(87) International publication number: WO 2023/130720

(57) **Abstract**

A cleaning brush and an intelligent cleaning apparatus. The cleaning brush comprises a shaft rod, a cylindrical member and at least one end member, the shaft rod being provided with two first end parts which are opposite in the axial direction. The cylindrical member coaxially sleeves the periphery of the shaft rod, and is provided with two second end parts which are opposite in the axial direction, and a brush part is arranged on the outer surface of the cylindrical member. The at least one end member is mounted on the at least one first end part, the end member is provided with a blocking structure used for preventing winding objects from excessively extending away from the cleaning brush. The end member and the first end part are each provided with a matched mounting structure. The second end parts, corresponding to the end member, of the cylindrical member cover at least part of the end member. The winding objects wound on the cylindrical member are prevented from being directly wound on the shaft rod, so that the winding objects are wound on the end member, and cleaning is convenient.

## Description

### CROSS-REFERENCE TO RELATED APPLICATION

The present disclosure claims priority to Chinese Patent Application No. 202210022939.2 filed on January 10, 2022, the entire content of which is incorporated herein by reference.

### TECHNICAL FIELD

The present disclosure relates to the field of cleaning device technologies, and particularly, to a cleaning brush and an intelligent cleaning device.

### BACKGROUND

A cleaning brush is an important functional part of a cleaning device. An end cover of the cleaning brush is used to block an entanglement such as hairs or silk threads wound during a working process of the cleaning device, so as to avoid the phenomenon of jamming of a power output end and a bearing end of a motor due to entanglement because of excessive extension of the entanglement to the end of the cleaning brush.

An end cover of the existing cleaning brush has a relatively small size, such that a longer end of a shaft rod of the cleaning brush is exposed outside the end cover; and the end cover is located outside a cylindrical member sleeving a shaft cover of the cleaning brush. Consequently, it is easy for an entanglement wound around the cylindrical member to wind from the end of the cylindrical member to the end of the shaft rod, resulting in a relatively deep entangling position. In addition, the end cover must be detached to remove the entanglement from the inside of the cylinder member, which is laborious. In addition, due to the relatively small size of the end cover of the existing cleaning brush, it is difficult to find the missing installation of the end cover of the cleaning brush in the assembly process, so it is necessary to provide a responsible missing-installation prevention structure.

### SUMMARY

A main object of the present disclosure is to overcome at least one defect of the prior art, a cleaning brush that may prevent the entanglement from being wound to the shaft rod and is convenient for cleaning the entanglement is provided.

Another object of the present disclosure is to overcome at least one defect of the prior art, and an intelligent cleaning device including the above cleaning brush is provided.

To this end, the present disclosure adopts the following technical solutions.

According to an aspect of the present disclosure, a cleaning brush is provided. The cleaning brush includes a shaft rod, a cylindrical member and at least one end member, wherein the shaft rod is provided with two first ends opposite in an axial direction; the cylindrical member coaxially sleeves the shaft rod and is provided with two second ends opposite in an axial direction, and a brush piece is arranged on an outer surface of the cylindrical member; the at least one end member is installed on at least one of the first ends, and the end member is provided with a blocking structure for preventing an entanglement from excessively extending away from the cleaning brush; the end member and the first end are provided with installation structures matching each other respectively; and the second end of the cylindrical member, which corresponds to the end member, covers at least a portion of the end member.

According to one implementation of the present disclosure, the second end of the cylindrical member, which corresponds to the end member, covers the first end on which the end member is installed.

According to one implementation of the present disclosure, the blocking structure of the end member is located outside the second end of the cylindrical member, which corresponds to the end member.

According to one implementation of the present disclosure, the installation structure includes a guide hole and a guide shaft. A guide hole is coaxially formed in an end surface of the first end; and the guide shaft is connected to the end member and used for being inserted into the guide hole.

According to one implementation of the present disclosure, the installation structure includes a guide sleeve. The guide sleeve is arranged at an end of the end member facing the shaft rod and used for sleeving the first end; a sidewall of the first end is provided with at least one first limiting structure; and an inner wall of the guide sleeve is provided with at least one second limiting structure matching the at least one first limiting structure.

According to one implementation of the present disclosure, along the axial direction of the shaft rod, a distance between the blocking structure corresponding to the same first end and an end of the guide sleeve away from the end member accounts for more than 5% of the length of the shaft rod.

According one implementation of the present disclosure, one of the first limiting structure and the second limiting structure is a limiting rib, and the other is a limiting groove, the limiting rib matching the limiting groove in shape.

According to one implementation of the present disclosure, the limiting rib and the limiting groove are in spiral shapes matching each other.

According to one implementation of the present disclosure, a spiral direction of the spiral limiting rib and the spiral limiting groove is opposite to a rotation direction of the shaft rod.

According to one implementation of the present disclosure, an outer wall of the guide sleeve is provided with at least one first assembly identifier used for marking a rotation direction of the end member while being assembled with the shaft rod.

According to one implementation of the present disclosure, the second limiting structure is the limiting rib, the limiting rib being arranged on the inner wall of the guide sleeve by welding or an integrated molding process, or being formed from a part of structure of the guide sleeve through a stamping process; or the second limiting structure is the limiting groove, the limiting groove being a groove formed in the inner wall of the guide sleeve, or being a through groove penetrating through the guide sleeve.

According to one implementation of the present disclosure, the first end is provided with a plurality of the first limiting structures, which is uniformly arranged at intervals in a circumferential direction of the shaft rod.

According to one implementation of the present disclosure, the guide sleeve is provided with a plurality of the second limiting structures, which is uniformly arranged at intervals in a circumferential direction of the guide sleeve.

According to one implementation of the present disclosure, the outer wall of the outer wall of the guide sleeve is provided with at least one second assembly identifier, the at least one second assembly identifier corresponding to the at least one second limiting structure in position and used for marking a position of the at least one second limiting structure.

According to one implementation of the present disclosure, the blocking structure is a blocking ring, the blocking ring surrounding the outer circumference of the end member and being a closed-loop structure.

According to one implementation of the present disclosure, the end member is installed one each of the two first ends of the shaft rod, one of the two end members is provided with a transmission structure, and the other is used for installation of a bearing structure.

According to one implementation of the present disclosure, the transmission structure includes a columnar structure with a regularly polygonal cross-section, an axis of the columnar structure coinciding with an axis of the end member and an axis of the shaft rod; and the transmission structure is used to cooperate with an output end of a driving mechanism.

According to one implementation of the present disclosure, an end of the guide shaft of the end member, which is away from the shaft rod, extends out of the end member and serves as a matching section matching the bearing structure; and the bearing structure is detachably arranged on the matching section of the guide shaft.

According to one implementation of the present disclosure, the matching section is provided with a positioning groove in a circumferential direction, the positioning groove cooperating with the bearing structure by fixing each other's positions to prevent the bearing structure from displacing.

According to one implementation of the present disclosure, the cylindrical member is a flexible member or a rigid member.

According to another aspect of the present disclosure, an intelligent cleaning device is provided, which includes the cleaning brush proposed in the present disclosure and described in the above implementations.

From the above technical solutions, it can be seen that the cleaning brush and the intelligent cleaning device proposed in the present disclosure have the following advantages and positive effects.

The cleaning brush provided by the present disclosure includes the shaft rod, the cylindrical member and the end member. The end member is installed on the first end. The end member is provided with the blocking structure used for preventing an entanglement from excessively extending away from the cleaning brush. The end member and the first end are provided with installation structures matching each other respectively. The second end of the cylindrical member, which corresponds to the end member, covers at least a portion of the end member. With the above design, in the present disclosure, at least a portion of the end member intervenes between the shaft rod and the corresponding end of the cylindrical member, avoiding an entanglement wound on the cylindrical member from being wound to the shaft rod directly. Instead, the entanglement is wound on the end member and can thus be removed with the disassembly of the end member, such that cleaning is more convenient.

### BRIEF DESCRIPTION OF THE DRAWINGS

Various objects, features, and advantages of the present disclosure will become more apparent by considering the following detailed description of preferred embodiments of the present disclosure in conjunction with the accompanying drawings. The accompanying drawings are merely exemplary illustrations of the present disclosure, and are not necessarily drawn to scale. In the accompanying drawings, the same reference numerals always refer to the same or similar components, in which:
FIG. 1 is a schematic diagram of a three-dimensional structure of a cleaning brush shown according to an exemplary embodiment;
FIG. 2 is a schematic three-dimensional exploded view of the cleaning brush shown in FIG. 1;
FIG. 3 is a front view of FIG. 1;
FIG. 4 is a sectional view of a shaft side of FIG. 3;
FIG. 5 is a front view of FIG. 2;
FIG. 6 is a sectional view of a shaft side of FIG. 5;
FIG. 7 is a schematic diagram of a three-dimensional structure of a shaft rod and an end member of the cleaning brush shown in FIG. 1;
FIG. 8 is an enlarged schematic diagram of an exploded state of part of the structure shown in FIG. 7.

Reference numerals represent the following components:
100: shaft rod;
110: first end;
200: cylindrical member;
210: second end;
300: end member;
310: blocking structure;
320: transmission structure;
330: friction structure;
400: installation structure;
411: guide hole;
412: guide shaft;
4121: matching section;
4122: positioning groove;
420: guide sleeve;
421: first assembly identifier;
422: second assembly identifier;
431: limiting groove;
432: limiting rib;
500: bearing structure;
A: coverage area;
L0: length;
L1: distance.

### DETAILED DESCRIPTION

Typical embodiments embodying the features and advantages of the present disclosure will be described in detail in the following description. It should be understood that the present disclosure can have various variations in different embodiments, none of which departs from the scope of the present disclosure; and the descriptions and drawings therein are essentially for illustrative purposes and not intended to limit the present disclosure.

The following description of different exemplary embodiments of the present disclosure is given with reference to the accompanying drawings. The accompanying drawings form a part of the present disclosure, and different exemplary structures, systems and steps that may implement a plurality of aspects of the present disclosure are shown in examples. It should be understood that other specific schemes of components, structures, exemplary apparatuses, systems and steps may be used, and structural and functional modifications may be made without departing from the scope of the present disclosure. Further, although the terms "above", "between", "within" and the like may be used in the present description to describe different exemplary features and components of the present disclosure, but these terms are used herein only for convenience, for example, according to orientations in examples described in the accompanying drawings. Nothing in the present description should be construed to mean that a particular three-dimensional orientation of the structure is required to fall within the scope of the present disclosure.

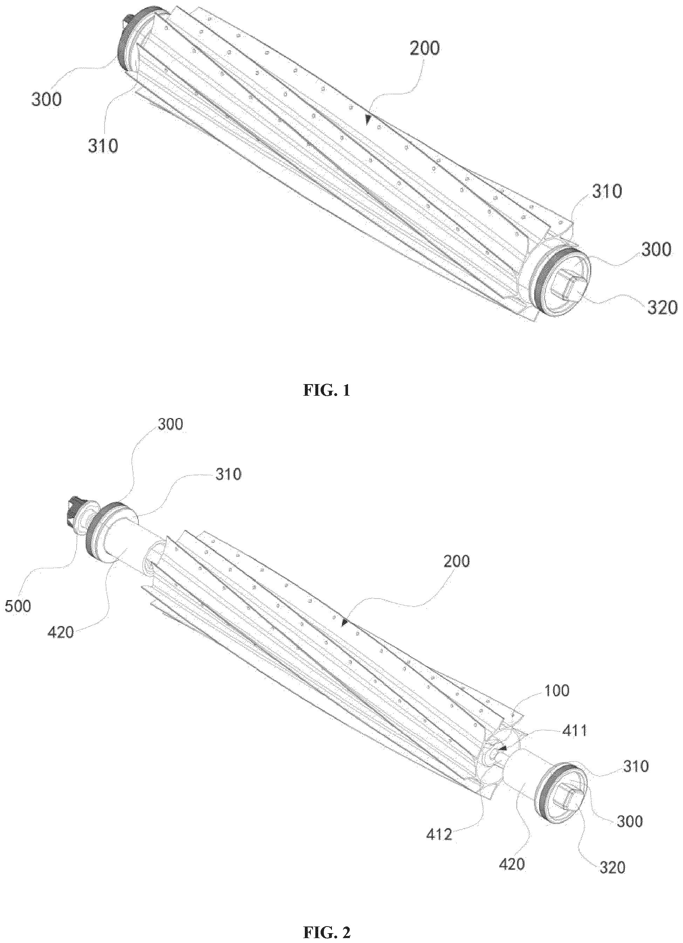

Referring to FIG. 1, a schematic diagram of a three-dimensional structure of a cleaning brush proposed in the present disclosure is representatively shown. In this exemplary implementation, the cleaning brush proposed in the present disclosure is illustrated by taking an example of being applied to an intelligent cleaning robot. As easily understood by a person skilled in the art, in order to apply relevant designs of the present disclosure to other types of cleaning devices, various modifications, additions, replacements, deletions or other changes are made to the following specific implementations, but these changes still fall within the scope of the principles of the cleaning brush proposed in the present disclosure.

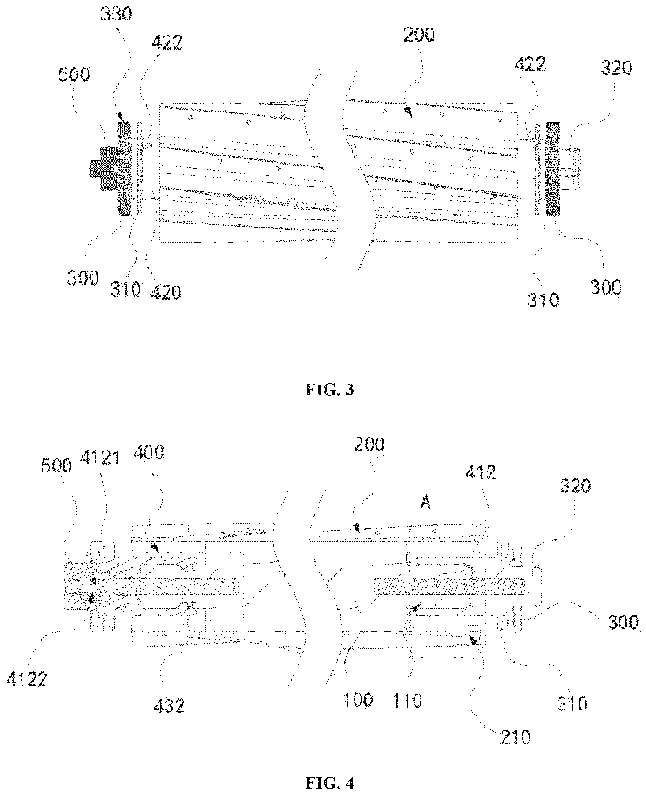

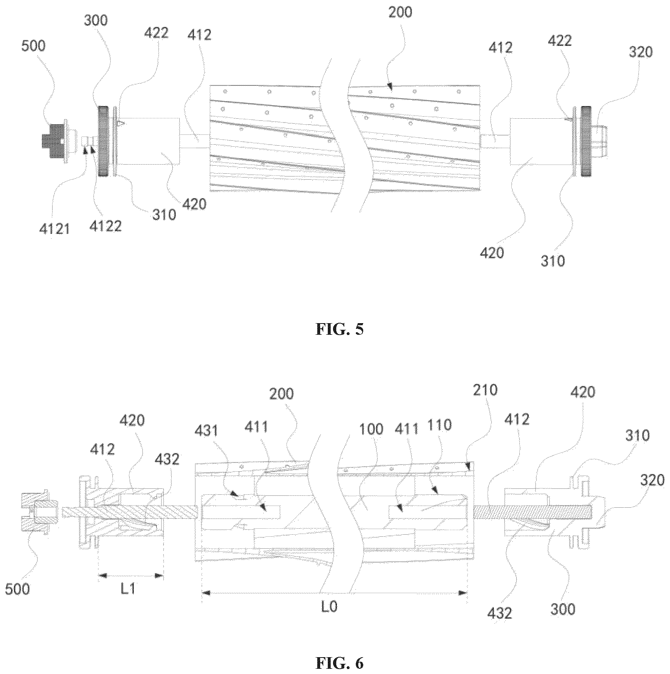

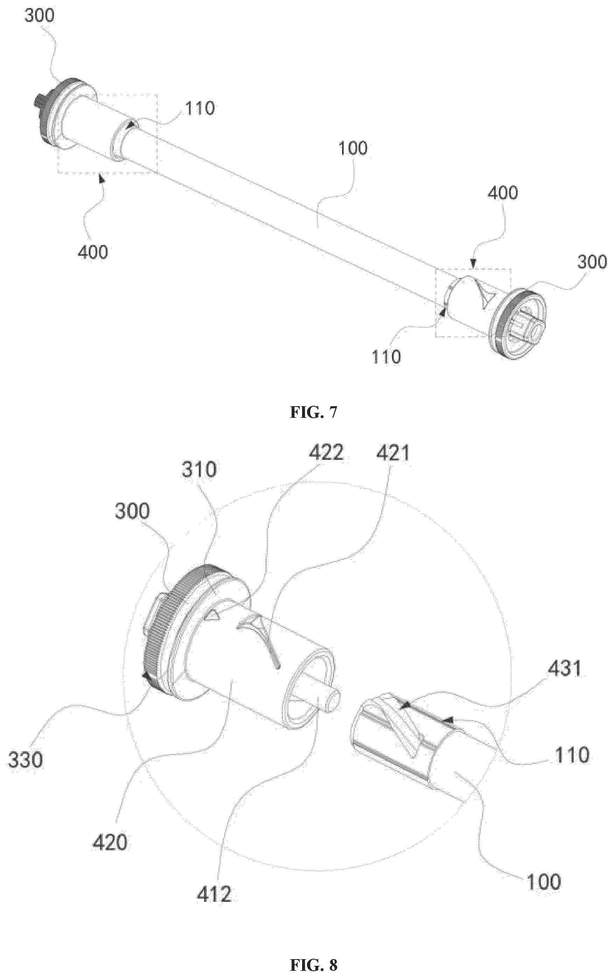

As shown in FIG. 1, in this implementation, the cleaning brush proposed in the present disclosure mainly includes a shaft rod 100 (not shown in the figure), a cylindrical member 200 and two end members 300. Referring to FIGs. 2 to 8, FIG. 2 representatively shows a schematic three-dimensional exploded view of the cleaning brush; FIG. 3 representatively shows a front view of FIG. 1; FIG. 4 representatively shows a sectional view of a shaft side of FIG. 3; FIG. 5 representatively shows a front view of FIG. 2; FIG. 6 representatively shows a sectional view of a shaft side of FIG. 5; FIG. 7 representatively shows a schematic diagram of a three-dimensional structure of the shaft rod 100 and the end members 300; and FIG. 8 representatively shows an enlarged schematic diagram of an exploded state of part of the structure shown in FIG. 7, and specifically shows an exploded state of one end member 300 and one first end 110 of the shaft rod. The structures, connection modes and functional relationships of main components of the cleaning brush proposed in the present disclosure will be described in detail below in conjunction with the above accompanying drawings.

As shown in FIGs. 1 to 4, in one implementation of the present disclosure, the shaft rod 100 has two first ends 110 opposite in an axial direction, that is, two ends of the shaft rod 100 are the first ends 110 respectively. The cylindrical member 200 coaxially sleeves the shaft rod 100 and is provided with two second ends 210 opposite in an axial direction, that is, two ends of the cylindrical member 200 are second ends 210 respectively. A brush piece is arranged on an outer surface of the cylindrical member 200. The two end members 300 are installed on the two first ends 110 of the shaft rod 100 respectively. Each end member 300 is provided with a blocking structure 310 capable of preventing an entanglement such as hairs and silk threads from excessively extending away from the cleaning brush. In addition, the end member 300 and the first end 110 corresponding to the end member 300 are provided with installation structures 400 matching each other respectively. On this basis, the second end 210 of the cylindrical member 200, which corresponds to the end member 300, covers at least a portion of the end member 300, see a coverage area A shown in FIG. 4 for details. With the above design, in the present disclosure, at least part of the end member 300 intervenes between the shaft rod 110 and the corresponding end of the cylindrical member 200, avoiding an entanglement wound on the cylindrical member 200 from being wound to the shaft rod 100. Instead, the entanglement is wound on the end members 300 and can thus be removed with the disassembly of the end members 300, such that cleaning is more convenient. In addition, during the assembly process of the cleaning brush, it is easier to find that the cleaning brush is provided with no end member 300 if the end member 300 is not assembled.

It should be noted that each implementation of the present description is illustrated by taking the two first ends 110 of the shaft rod 100 being provided with the end members 300 respectively as an example. It should be understood that in some implementations, it is also possible to install an end member 300 only on one first end 110 of the shaft rod 100 in the present disclosure. In other words, in various possible implementations conforming to the design conception of the present disclosure, the cleaning brush proposed in the present disclosure includes at least one end member 300, the at least one end member 300 being installed on at least one first end 110 of the shaft rod 100.

As shown in FIGs. 2, 4 and 6, in one implementation of the present disclosure, the second end 210 of the cylindrical member 200, which corresponds to the end member 300, may cover the first end 110, on which the end member 300 is installed. In other words, the first end 110 on which the end member 300 is installed is all located within a coverage range of the second end 210 corresponding to the first end, that is, the first end 110 does not extend out of the second end 210, and also the length of the shaft rod 100 is less than the length of the cylindrical member 200. In some implementations, the first end 110 on which the end member 300 is installed may also partially extend out of the coverage range of the corresponding second end 210, that is, the first end 110 may extend out of the coverage area A shown in FIG. 4, but is not limited thereto in this implementation, as long as it is ensured that the second end 210 covers at least part of the end member 300.

As shown in FIGs. 1 to 6, in one implementation of the present disclosure, the blocking structure 310 of the end member 300 may be located outside the second end 210 of the cylindrical member 200, which corresponds to the end member 300. In other words, the blocking structure 310 of the end member 300 may be located outside the coverage area A shown in FIG. 4.

As shown in FIGs. 2, FIG. 4 and FIG. 6, in one implementation of the present disclosure, the installation structure 400 may include a guide hole 411 and a guide shaft 412. Specifically, the guide hole 411 is coaxially formed in an end surface of the first end 110. The guide shaft 412 is connected to the end member 300 and used for being inserted into the guide hole 411. With the above design, the guide shaft 412 and the guide hole 411 cooperate with each other by means of insertion, so that an axial guidance function and a radial limiting function are provided in the installation of the end members 300 and the shaft rod 100 in the present disclosure.

As shown in FIGs. 1 to 6, in one implementation of the present disclosure, the installation structure 400 may further include a guide sleeve 420. Specifically, the guide sleeve 420 is arranged at an end of the end member 300 facing the shaft rod 100 and can sleeve the first end 110. On this basis, a sidewall of the first end 110 is provided with a first limiting structure, and an inner wall of the guide sleeve 420 is provided with a second limiting structure matching the first limiting structure. Accordingly, the cleaning brush can achieve no relative rotation between the shaft rod 100 and the end members 300 by means of the cooperation between the first limiting structure and the second limiting structure.

In addition, as shown in FIGs. 2, FIG. 4 and FIG. 6, in one implementation of the present disclosure, the installation structure 400 may include a guide hole 411, a guide shaft 412 and a guide sleeve 420 at the same time. On this basis, the guide sleeve 420 may be arranged around the periphery of at least part of sections of the guide shaft 412 at intervals. In some implementations, the installation structure 400 may also include a guide hole 411 and a guide shaft 412 only, or a guide sleeve 420 alone, or realize installation and fixation of the end member 300 and the first end 110 of the shaft rod 100 by means of other structures.

As shown in FIG. 4, in one implementation of the present disclosure, along the axial direction of the shaft rod 100, the distance L1 between the blocking structure 310 corresponding to the same first end 110 and an end of the guide sleeve 420 away from the end member 300 may account for more than 5%, e.g., 5%, 8%, 10% or 15% of the length L0 of the shaft rod 100. Accordingly, compared with the existing cleaning brush in which an end cover has a relatively small size, the cleaning brush of the present disclosure is characterized in that through the design that the guide sleeve 420 partially intervenes between the first end 110 and the second end 210, each end member 300 has a relatively large size (including a size of the guide sleeve 420), so as to increase a space of the end member 300 for an entanglement to wind, and further prevent the entanglement from being wound to the shaft rod 100. In other words, according to the present disclosure, the design of a length relationship of the above related members is adopted, so that the length of a part of each end member 300 which matches the shaft rod 100 is extended, resulting in a size increase and easy processing and production.

As shown in FIGs. 6 and 8, in one implementation of the present disclosure, the first limiting structure may be a limiting groove 431, the second limiting structure may be a limiting rib 432, and the limiting groove 431 matches the limiting rib 432 in shape. Accordingly, in the process of the guide sleeve 420 sleeving the first end 110 of the shaft rod 100, the limiting rib 432 and the limiting groove 431 cooperate with each other to provide guiding and limiting functions during the above installation process. In some implementations, the first limiting structure may also be a limiting rib 432, and the second limiting structure may also be a limiting groove 431. In other words, in various possible implementations conforming to the design conception of the present disclosure, one of the first limiting structure and the second limiting structure may be a limiting rib 432, and the other may be a limiting groove 431 whose shape matches that of the limiting rib 432. In addition, the first limiting structure and the second limiting structure can also adopt other forms of limiting cooperation structures, but are not limited to this.

As shown in FIG. 6 and FIG. 8, in one implementation of the present disclosure, the limiting rib 432 and the limiting groove 431 are in spiral shapes which match each other. Accordingly, in the disassembly and assembly processes of the end members 300 and the shaft rod 100, a relative displacement in an axial direction and a relative rotation in a circumferential direction exist therebetween.

Based on the design of the spiral shape of the limiting rib 432 and the limiting groove 431, in one implementation of the present disclosure, a spiral direction of the spiral limiting rib 432 and the spiral limiting groove 431 may be opposite to a rotation direction of the shaft rod 100. With the above design, in a case that the shaft rod 100 rotates in the cleaning device in a rotation direction, the limiting rib 432 can be further prevented from being disengaged from the limiting groove 431 as the spiral direction of the limiting rib 432 and the limiting groove 431 is opposite to this rotation direction, thereby ensuring the installation stability and reliability of the shaft rod 100 and the end members 300.

As shown in FIG. 7 and FIG. 8, based on the design of the spiral design of the limiting rib 432 and the limiting groove 431, in one implementation of the present disclosure, an outer wall of the guide sleeve 420 may be provided with at least one first assembly identifier 421 which can mark a rotation direction (i.e., the spiral direction of the limiting rib 432 and the limiting groove 431) when the end members 300 and the shaft rod 100 are assembled.

As shown in FIG. 7 and FIG. 8, based on the design that the guide sleeve 420 is provided with the first assembly identifier 421, in one implementation of the present disclosure, the outer wall of the guide sleeve 420 may be provided with a deformation groove, which can prevent a shrinkage deformation of injection molded parts such as the guide sleeve 420 and the end members 300. On this basis, the deformation groove may adopt a special shape, e.g., approximately a triangle, an arrow, etc., as the first assembly identifier 421 to mark the rotation direction when the end members 300 and the shaft rod 100 are assembled while preventing the shrinkage deformation.

As shown in FIG. 4 and FIG. 6, in one implementation of the present disclosure, the limiting rib 432 may be arranged on an inner wall of the guide sleeve 420 through an integrated molding process in a case that the second limiting structure is the limiting rib 432. In one implementation, the limiting rib 432 may also be arranged on the inner wall of the guide sleeve 420 through other processes, e.g., by welding, or formed from part of the structure of the guide sleeve 420 by stamping, etc. Moreover, a limiting groove 431 may be a groove formed in the inner wall of the guide sleeve 420 or a through groove penetrating through the guide sleeve 420, in a case that the second limiting structure is the limiting groove 431.

In one implementation of the present disclosure, the first end 110 may be provided with a plurality of first limiting structures, which is uniformly arranged at intervals in a circumferential direction of the shaft rod 100.

In one implementation of the present disclosure, the guide sleeve 420 may be provided with a plurality of the second limiting structures, which is uniformly arranged at intervals in a circumferential direction of the guide sleeve 420.

As described above, by taking the first limiting structure and the second limiting structure being the limiting groove 431 and the limiting rib 432 respectively as an example, in a case of a plurality of limiting grooves 431, the number of the limiting rib 432 may be one or more, and the number of the limiting ribs 432 is not greater than the number of the limiting grooves 431, but may be less than the number of the limiting grooves 431.

As shown in FIG. 5 and FIG. 8, in one implementation of the present disclosure, the outer wall of the guide sleeve 420 may be provided with at least one second assembly identifier 422, and the at least one second assembly identifier 422 may correspond to at least one second limiting structure in position and accordingly is capable of marking a position of the at least one second limiting structure. In some implementations, in a case that the inner wall of the guide sleeve 420 is provided with a plurality of second limiting structures, the outer wall of the guide sleeve 420 may be provided with only one second assembly identifier 422 which corresponds to any second limiting structure; or the outer wall of the guide sleeve 420 may be provided with a plurality of second assembly identifiers 422 which correspond to the plurality of second limiting structures respectively.

As shown in FIGs. 1 to 6, in one implementation of the present disclosure, the blocking structure 310 of each end member 300 may be a blocking ring which may surround the outer circumference of the end member 300 and is a closed-loop structure.

As shown in FIGs. 1 to 7, in one implementation of the present disclosure, the end member 300 is installed on each of the two first ends 110 of the shaft rod 100. On this basis, one of the two end members 300 is provided with a transmission structure 320, the transmission structure 320 being used to transmit a torque. The other of the two end members 300 is used for installation of a bearing structure 500. On this basis, the end member 300 provided with the transmission structure 320 is connected to a driving mechanism of the cleaning device through the transmission structure 320, and the end member 300 on which the bearing structure 500 is installed is rotatably connected to other structures (e.g., a device body) of the cleaning device through the bearing structure 500. Accordingly, in a case that the end member 300 (i.e., a driving side end cover) provided with the transmission structure 320 is installed, the driving side end cover rotates around the guide hole 411. In addition, due to the spiral limiting groove 431 and the spiral limiting rib 432, the driving side end cover may move in an axial direction while rotating, thereby completing the entire assembly and disassembly of the end cover. Similarly, in a case that the end member 300 (i.e., a bearing side end cover) for installation of the bearing structure 500 is installed, the bearing side end cover may also be assembled and disassembled according to the same movement logic. Meanwhile, since the spiral direction of the spiral limiting rib 432 and the spiral limiting groove 431 is opposite to the rotation direction of the shaft rod 100 (i.e., a working direction of a main brush), spiral loosening will not occur during work. With the above design, in the assembly process of the cleaning brush, cooperation structures (e.g., laminated structures and bearing structures 500) installed or provided on the two end members 300 respectively are not disposed in a case that the end members 300 are not assembled, such that main brush parts (e.g., the shaft rod 100 and the cylindrical member 200) cannot be installed in place after missing installation of the end members 300, thereby achieving a more thorough missing installation prevention function. In addition, in a case that the end members 300 are installed at the two first ends 110 of the shaft rod 100 respectively, he same installation structure 400 is adopted between the two first ends 110 of the shaft rod 100 and between the two end members 300, which is convenient for foolproof production, thereby being conducive to reducing a processing error rate and increasing a production yield.

As shown in FIG. 1 and FIG. 2, based on the design that one end member 300 is provided with the transmission structure 320, in one implementation of the present disclosure, the transmission structure 320 may include a columnar structure with a regularly polygonal cross-section, an axis of the columnar structure coinciding with an axis of the end member 300 and an axis of the shaft rod 100, the transmission structure being accordingly used to cooperate with an output end of a driving mechanism, e.g., a final-stage output gear of a gearbox.

As shown in FIGs. 2 to 6, based on the design that the bearing structure 500 is installed on the other end member 300, in one implementation of the present disclosure, an end of the guide shaft 412 arranged on the end member 300, which is away from the shaft rod 100, extends out of the end member 300 and serves as a matching section 4121 matching the bearing structure 500; and the bearing structure 500 is detachably arranged on the matching section 4121 of the guide shaft 412.

As shown in FIG. 5 and FIG. 6, based on the design that the guide shaft 412 is provided with the matching section 4121, in one implementation of the present disclosure, the matching section 4121 of the guide shaft 412 may be provided with a positioning groove 4122 in a circumferential direction. For example, the outer diameter of the matching section 4121 is designed to be smaller than the outer diameter of other section of the guide shaft 412, such that the matching section 4121 forms the positioning groove 4122. On this basis, the positioning groove 4122 cooperates with the bearing structure 500 by fixing each other's positions for preventing the bearing structure 500 from displacing.

As shown in FIG. 8, in one implementation of the present disclosure, a friction structure 300, for example, but not limited to friction lines or fraction bulges, may be arranged on the end member 300, such that it is easier to screw the end member 300 during assembly.

In one implementation of the present disclosure, the cylindrical member 200 may be a flexible member or a rigid member. In addition, the brush piece may be arranged on the outer surface of the cylindrical member 200 by means of sticking, insertion and the like. In a case that the cylindrical member 200 is the flexible member, the brush piece and the cylindrical member 200 may also be integrally formed. In some implementations, the brush piece may also be a blade, bristles or in other forms.

It should be noted herein that the cleaning brush shown in the drawings and described in the present description is only a few examples of many types of cleaning brushes capable of adopting the principles of the present disclosure. It should be clearly understood that the principles of the present disclosure are in no way limited to any detail or any part of the cleaning brush shown in the drawings or described in the present description.

For example:
in an implementation of the present disclosure, the first end is provided with a plurality of the first limiting structures, which is uniformly arranged at intervals in a circumferential direction of the shaft rod.

In an implementation of the present disclosure, the guide sleeve is provided with a plurality of the second limiting structures, which is uniformly arranged at intervals in a circumferential direction of the guide sleeve.

In an implementation of the present disclosure, the outer wall of the guide sleeve is provided with at least one second assembly identifier, the at least one second assembly identifier corresponding to the at least one second limiting structure in position and used for marking a position of the at least one second limiting structure.

In an implementation of the present disclosure, the blocking structure is a blocking ring, the blocking ring surrounding the outer circumference of the end member and being a closed-loop structure.

In an implementation of the present disclosure, the end member is installed on each of the two first ends of the shaft rod, one of the two end members is provided with a transmission structure, and the other is used for installation of a bearing structure.

In an implementation of the present disclosure, the transmission structure includes a columnar structure with a regularly polygonal cross-section, an axis of the columnar structure coinciding with an axis of the end member and an axis of the shaft rod; and the transmission structure is used to cooperate with an output end of a driving mechanism.

In an implementation of the present disclosure, one end of the guide shaft of one of the end members, which is away from the shaft rod, extends out of the end member and serves as a matching section matching the bearing structure; and the bearing structure is detachably arranged on the matching section of the guide shaft.

In an implementation of the present disclosure, the matching section is provided with a positioning groove in a circumferential direction, the positioning groove cooperating with the bearing structure by fixing each other's positions to prevent the bearing structure from displacing.

In an implementation of the present disclosure, the cylindrical member may be a flexible member or a rigid member.

Based on the above detailed description of several exemplary implementations of the cleaning brush proposed in the present disclosure, an exemplary implementation of the intelligent cleaning device proposed in the present disclosure will be described below.

In one implementation of the present disclosure, the intelligent cleaning device proposed in the present disclosure includes a cleaning brush proposed in the present disclosure and detailed in the above implementations.

It should be noted herein that the intelligent cleaning device shown in the drawings and described in the present description is only a few examples of many types of intelligent cleaning device capable of adopting the principles of the present disclosure. It should be clearly understood that the principles of the present disclosure are in no way limited to any detail or any part of the intelligent cleaning device shown in the drawings or described in the present description.

In summary, the cleaning brush purposed by the present disclosure includes the shaft rod 100, the cylindrical member 200 and the end members 300. Each end member 300 is installed on the first end 110 of the shaft rod 100. Each end member 300 is provided with the blocking structure 310 for preventing an entanglement from excessively extending away from the cleaning brush. The end member 300 and the first end 110 are provided with installation structures 400 matching each other respectively. The second end 210 of the cylindrical member 200, which corresponds to the end member 300, covers at least a portion of the end member 300. With the above design, in the present disclosure, at least part of the end member 300 intervenes between the shaft rod 100 and the corresponding end of the cylindrical member 200, avoiding an entanglement wound on the cylindrical member 200 from being wound to the shaft rod 100. Instead, the entanglement is wound on the end member 300 and can thus be removed with the disassembly of the end member 300, such that cleaning is more convenient.

The exemplary implementations of the cleaning brush and the intelligent cleaning device proposed in the present disclosure are described and/or illustrated above in detail. However, the implementations of the present disclosure are not limited to the particular implementations described herein. On the contrary, components and/or steps of each implementation may be used independently and separately from the other components and/or steps described herein. Each component and/or each step in one implementation may also be used in conjunction with other components and/or steps of other implementations. In the course of introducing the elements/components/etc. described and/or illustrated herein, the terms "a/an", "one" and "the" are used to indicate the presence of one or more elements/components/etc. The terms "comprising", "including" and "provided with" are used to denote open-ended inclusion and means that additional elements/components/etc. may exist in addition to those listed. In addition, the terms "first" and "second" in the claims and description are used only as marks and are not numerical restrictions on their objects.

Although the cleaning brush and the intelligent cleaning device proposed in the present disclosure have been described according to different particular embodiments, a person skilled in the art will recognize that the implementation of the present disclosure may be modified within the spirit and scope of the claims.

## Claims

1. A cleaning brush, comprising:
a shaft rod, provided with two first ends opposite in an axial direction;
a cylindrical member, coaxially sleeving the shaft rod and provided with two second ends opposite in the axial direction, a brush piece being arranged on an outer surface of the cylindrical member; and
at least one end member, installed on at least one of the first ends, the end member being provided with a blocking structure for preventing an entanglement from excessively extending away from the cleaning brush, the end member and the first end being provided with installation structures matching each other respectively, wherein
the second end, corresponding to the end member, of the cylindrical member, covers at least a portion of the end member.

2. The cleaning brush according to claim 1, wherein
the second end, corresponding to the end member, of the cylindrical member, covers the first end with the end member installed thereon; and/or
the blocking structure of the end member is located outside the second end, corresponding to the end member, of the cylindrical member.

3. The cleaning brush according to claim 1, wherein the installation structure comprises:
a guide hole, coaxially defined in an end surface of the first end; and
a guide shaft, connected to the end member and configured for being inserted into the guide hole.

4. The cleaning brush according to any one of claim 1-3, wherein the installation structure comprises:
a guide sleeve, arranged at an end of the end member facing the shaft rod and configured for sleeving the first end, wherein
a sidewall of the first end is provided with at least one first limiting structure, and an inner wall of the guide sleeve is provided with at least one second limiting structure matching the at least one first limiting structure.

5. The cleaning brush according to claim 4, wherein a distance between the blocking structure and an end of the guide sleeve away from the end member is greater than 5% of a length of the shaft rod along the axial direction of the shaft rod, and the blocking structure and the guide sleeve correspond to a same first end.

6. The cleaning brush according to claim 4, wherein one of the first limiting structure and the second limiting structure is a limiting rib, the other one of the first limiting structure and the second limiting structure is a limiting groove, and the limiting rib matches the limiting groove in shape.

7. The cleaning brush according to claim 6, wherein the limiting rib and the limiting groove are in spiral shapes and match each other in shape.

8. The cleaning brush according to claim 7, wherein
a spiral direction of the spiral limiting rib and the spiral limiting groove is opposite to a rotation direction of the shaft rod; and/or
an outer wall of the guide sleeve is provided with at least one first assembly identifier for marking a rotation direction when the end member and the shaft rod are assembled.

9. The cleaning brush according to claim 6, wherein
the second limiting structure is the limiting rib, the limiting rib is arranged on the inner wall of the guide sleeve by welding or an integrated molding process, or is formed from a part of structure of the guide sleeve through a stamping process; or
the second limiting structure is the limiting groove, the limiting groove is a groove defined in the inner wall of the guide sleeve, or is a through groove running through the guide sleeve.

10. The cleaning brush according to claim 4, wherein
the first end is provided with a plurality of the first limiting structures uniformly arranged at intervals in a circumferential direction of the shaft rod; and/or
the guide sleeve is provided with a plurality of the second limiting structures uniformly arranged at intervals in a circumferential direction of the guide sleeve.

11. The cleaning brush according to claim 4, wherein
the sidewall of the first end is provided with at least one third limiting structure, and the inner wall of the guide sleeve is provided with at least one fourth limiting structure matched with the third limiting structure; wherein, one of the third limiting structure and the fourth limiting structure is a bump clip, and the other one of the third limiting structure and the fourth limiting structure is a clamping slot matched with the bump clip.

12. The cleaning brush according to claim 11, wherein
the first end is provided with a plurality of first limiting structures and a plurality of third limiting structures, the plurality of first limiting structures and the plurality of third limiting structures are of equal quantity, wherein the plurality of first limiting structures and the plurality of third limiting structures are alternately arranged at intervals in sequence along a circumferential direction of the shaft rod.

13. The cleaning brush according to claim 12, wherein
the plurality of first limiting structures and the plurality of third limiting structures are uniformly arranged at intervals along the circumference direction of the shaft rod.

14. The cleaning brush according to claim 11, wherein
the guide sleeve is provided with a plurality of second limiting structures and a plurality of fourth limiting structures, the plurality of second limiting structures and the plurality of fourth limiting structures are of equal quantity, wherein the plurality of second limiting structures and the plurality of fourth limiting structures are alternately arranged at intervals in sequence along a circumferential direction of the guide sleeve.

15. The cleaning brush according to claim 14, wherein
the plurality of second limiting structures and the plurality of fourth limiting structures are uniformly arranged at intervals along the circumference direction of the guide sleeve.

16. The cleaning brush according to claim 11, wherein:
the fourth limiting structure is the bump clip, and the bump clip is arranged on the inner wall of the guide sleeve by welding or an integrated molding process, or is formed from a part of structure of the guide sleeve through a stamping process; or
the fourth limiting structure is the clamping slot, and the clamping slot is a groove defined on the inner wall of the guide sleeve, or is a through groove running through the guide sleeve.

17. The cleaning brush according to claim 4, wherein an outer wall of the guide sleeve is provided with at least one second assembly identifier, the at least one second assembly identifier corresponds to the at least one second limiting structure in position and is configured for marking a position of the at least one second limiting structure.

18. The cleaning brush according to any one of claims 1 to 3, wherein the blocking structure is a blocking ring, and the blocking ring surrounds an outer circumference of the end member and being a closed-loop structure.

19. The cleaning brush according to any one of claims 1 to 3, wherein the end member is installed on each of the two first ends of the shaft rod, one of the two end members is provided with a transmission structure, and the other one of the two end members is configured for installation of a bearing structure.

20. The cleaning brush according to claim 19, wherein the transmission structure comprises a columnar structure with a regularly polygonal cross-section, an axis of the columnar structure coincides with an axis of the end member and an axis of the shaft rod, and the transmission structure is configured to cooperate with an output end of a driving mechanism.

21. The cleaning brush according to claim 19, wherein an end of the guide shaft, of one of the end members, away from the shaft rod, extends out of the end member and serves as a matching section matching the bearing structure; and the bearing structure is detachably arranged on the matching section of the guide shaft.

22. The cleaning brush according to claim 21, wherein the matching section is provided with a positioning groove in a circumferential direction, the positioning groove and the bearing structure form a positioning engagement to prevent the bearing structure from displacing.

23. An intelligent cleaning device, comprising the cleaning brush according to any one of claims 1 to 22.
